# EUROPEAN PATENT APPLICATION

(11) **EP 4 343 655 A1**
(43) Date of publication of application: **27.03.2024**
(21) Application number: 23198016.0
(22) Date of filing: 18.09.2023
(51) Int. Cl.: G06Q 20/10, G06Q 20/12, G06Q 20/24, G06Q 20/38, G06Q 20/40, G06Q 40/03, G06Q 20/20

(54) **METHOD AND APPARATUS FOR MAPPING OF PLANNED PURCHASES WITH PRE-APPROVED FINANCING TERMS TO FINANCIAL TRANSACTIONS**

(30) Priority: 26.09.2022 US 202217952831
(71) Applicant: Affirm, Inc., San Francisco, CA 94108 (US)
(72) Inventor: Sellick, Laurie, Pacifica, 94044 (US); Miller, Alexandra Lang, San Francisco, 94114 (US); Lovely, Ned Jackson, San Francisco, 94108 (US); Mahon, Andrew, San Francisco, 94108 (US); Schlesinger, Garrett, San Francisco, 94108 (US); Qian, Joshua, New York, 11201 (US)
(74) Representative: Piotrowicz, Pawel Jan Andrzej

(57) **Abstract**

A method of processing a customer transaction may include receiving an estimated purchase amount and merchant identity information defining a future purchase from a customer, providing loan terms associated with one or more financing options corresponding to the defined future purchase, responsive to the customer agreeing to terms on a selected financing option, storing the financing option in association with the estimated purchase amount and the merchant identity information, responsive to receiving an indication of a transaction between the customer and a merchant, determining whether the transaction maps to the defined future purchase, and originating a loan to finance the transaction in accordance with the selected financing option in response to the transaction mapping to the defined future purchase.

## Description

### TECHNICAL FIELD

Example embodiments generally relate to financial industry technologies and, in particular, relate to apparatuses, systems, and methods for facilitating commerce and for enabling customers to obtain financing terms for a purchase in advance, and correlate the later occurrence of the purchase to the earlier obtained financing terms seamlessly.

### BACKGROUND

The financial industry is comprised of many thousands of customers, merchants, lenders, borrowers, and other role players that all interact in various ways to enable customers to ultimately have access to goods and services provided by merchants. Credit and debit transactions have long been a way that individuals have managed point of sale transactions to ensure seamless transfer of funds from customers, or on their behalf, to merchants for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), there is not much flexibility at all after the decision is made as to which option to select.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers.

Installment loans, or buy now, pay later financing, have become a popular tool in relation to addressing the issues noted above. However, even this popular tool typically gets employed at the time a purchase is being undertaken. For example, the customer may select a product of interest and proceed to checkout (virtually or at a brick and mortar store) to purchase the product. The payment means selected to pay the merchant for the product may be a physical or virtual card that is linked to accounts that enable an installment loan to be granted to the customer, and funds may be transferred to the merchant on behalf of the customer for purchase of the product, if the customer is approved for the installment loan.

This process is, in many cases, desirably enhanced to try to make the user experience as positive as possible by, for example, making decisions on approval faster, or by making various aspects of obtaining or servicing the loan easier. However, the user nevertheless faces some risk that the loan may not be approved, and the embarrassment or annoyance of being denied approval at checkout can be very frustrating for some users. Like the enhancements to the user experience in this context, this potential problem can also be dealt with by technical means, which is one of the solutions this disclosure addresses.

### BRIEF SUMMARY OF SOME EXAMPLES

Accordingly, some example embodiments may enable the provision of technical means by which to give customers the ability to plan a future purchase and obtain loan terms and approval for a financing program (or loan) in advance. Thereafter, when a transaction occurs that can be correlated to the loan, processing is automatically initiated to map the transaction to the loan and pay the merchant. Such power may enable customers to have access to credit with confidence and convenience via an instrument such as a debit card (or credit card) whether virtual or physical.

In an example embodiment, a method of processing a customer transaction may be provided. The method may include receiving an estimated purchase amount and merchant identity information defining a future purchase from a customer, providing loan terms associated with one or more financing options corresponding to the defined future purchase, responsive to the customer agreeing to terms on a selected financing option, storing the financing option in association with the estimated purchase amount and the merchant identity information, responsive to receiving an indication of a transaction between the customer and a merchant, determining whether the transaction maps to the defined future purchase, and originating a loan to finance the transaction in accordance with the selected financing option in response to the transaction mapping to the defined future purchase.

In another example embodiment, an apparatus for processing a customer transaction may include processing circuitry configured for receiving an estimated purchase amount and merchant identity information defining a future purchase from a customer, providing loan terms associated with one or more financing options corresponding to the defined future purchase, responsive to the customer agreeing to terms on a selected financing option, storing the financing option in association with the estimated purchase amount and the merchant identity information, responsive to receiving an indication of a transaction between the customer and a merchant, determining whether the transaction maps to the defined future purchase, and originating a loan to finance the transaction in accordance with the selected financing option in response to the transaction mapping to the defined future purchase.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram showing control flow for account setup in accordance with an example embodiment;
FIG. 4 illustrates a block diagram for control flow associated with initial transaction handling in accordance with an example embodiment;
FIG. 5 illustrates a block diagram of control flow for defining a future purchase to associate with a loan in accordance with an example embodiment;
FIG. 6 shows a block diagram of control flow for handling a transaction that may be mapped to the previously defined future purchase in accordance with an example embodiment;
FIG. 7 is a block diagram showing how funds flow between parties in accordance with an example embodiment; and
FIG. 8 illustrates a method for managing a customer transaction in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage (or plan) financing of individual transactions even before the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in real time without the need for obtaining approval for a loan at the time of the transaction. In other words, instead of merely initiating a platform for supporting installment loan (or other financing options) decisions at the time of the transactions, example embodiments provide customers with technical means by which to obtain financing ahead of time for a particular transaction, and then map the transaction to the financing option that was previously obtained when the transaction occurs. This stands in contrast to today's paradigm in which either a loan is applied for at the time of the transaction, or a "pre-approved" loan amount is generically promised without specific loan terms being agreed upon (again until the transaction occurs). The loan can be agreed upon, and the transaction can be conducted and mapped to the loan all before any movement of funds or money occurs. The creation of one platform, managed by the facilitator, for the interaction of multiple parties to enable a prior determination of whether a loan having agreed upon loan terms can be granted to support a transaction so that the transaction can later be conducted and tied to the loan provides a flexible and yet cohesive experience for customers that maximizes responsible access to financial freedom and satisfaction.

Within this context, a transaction is considered "settled" when all parties involved in the transaction have received any payments or funds that may be owed to them. Thus, if cash is paid to the merchant by the customer, the transaction is immediately settled. For a credit card purchase, the transaction may be settled when the merchant has received funds from a bank associated with the credit card, and the customer has paid the bank accordingly so that the bank has also received the funds it advanced on behalf of the customer to the merchant. For a debit card purchase, the transaction may be settled when the merchant has received funds from a bank associated with the debit card, and the bank has debited the customer's account accordingly so that the bank has also received the funds it advanced on behalf of the customer to the merchant. Example embodiments may allow a transaction to proceed as if a normal credit or debit card purchase as far as the merchant is concerned, but a loan or financing option (e.g., an installment loan or a buy now, pay later loan) that was previously associated with the transaction before it occurred, is mapped to the transaction and instantiated after the transaction occurs. In this context, a buy now, pay later loan should be considered to be an installment loan, or a loan that has a fixed payment amount and term for making such payments. In other words, the buy now, pay later or installment loan does not have a conventional interest rate that applies over whatever indeterminate period of time the customer chooses to keep the loan by not paying off the entire principal.

Example embodiments not only provide the SFP platform, but also provide various enabling technologies that may facilitate operation of the SFP platform itself or of modules that may interact with the SFP platform. Example embodiments may also provide for enhancement of functionalities associated with the environment that is created by the SFP platform. The SFP platform may provide a mechanism by which to enhance commerce in a responsible way that is both empathetic and empowering to customers.

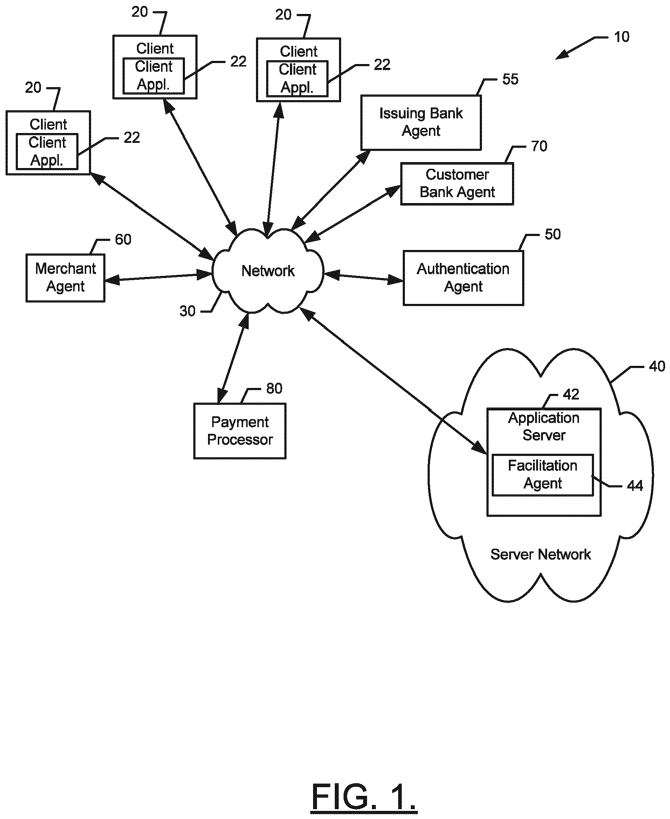

An example embodiment will now be described in reference to FIG. 1, which illustrates an example system in which an example embodiment may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system. Furthermore, in some cases, some embodiments may be practiced on a single client without any connection to the system.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server, which together may form respective elements of a server network 40. Although the application server 42 and the database server are each referred to as "servers," this does not necessarily imply that they are embodied on separate servers or devices. As such, for example, a single server or device may include both entities and the database server could merely be represented by a database or group of databases physically located on the same server or device as the application server 42. The application server 42 and the database server may each include hardware and/or software for configuring the application server 42 and the database server, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to the SFP platform 10, and more particularly relating to facilitating transactions where the details of setting the transaction will be determined after the transaction. For example, the application server 42 may be configured to provide for storage of information descriptive of events or activities associated with the SFP platform 10 and the execution of a financial transaction on behalf of a customer in real time, while delaying the customers decision on how to settle the transaction to a later time. In some cases, data and/or services may be exchanged amongst members, where specific needs or desires of the members are aligned with respect to playing their respective roles in connection with conducting a financial transaction, and enabling the settlement method for the transaction to be determined at a later time.

In some embodiments, for example, the application server 42 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 42 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download.

In an example embodiment, the client application 22 may therefore include application programming interfaces (APIs) and other web interfaces to enable the client 20 to conduct business via the SFP platform 10. The client application 22 may include a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may enable the customer to review monthly statements, request a physical credit or debit card, turn on or off a virtual or digital card, access or adjust information associated with the customer account, or receive help or other information. Budgeting tools and other useful information and other useful tools for managing the finances of the customer may also be available via the client application 22 in some cases.

In an example embodiment, the application server 42 may include or have access to memory (e.g., internal memory or the database server) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or merchants in real-time) may be accomplished by a particular entity (namely the facilitation agent 44 residing at the application server 42). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a merchant agent 60, a customer bank agent 70, and a payment processor 80. The facilitation agent 44 may be configured to interact with, or otherwise facilitate interactions between, each of the bank authentication agent 50, the issuing bank agent 55, the merchant agent 60, the customer bank agent 70, and the payment processor 80 in order to carry out example embodiments as described herein. Thus, each of the bank authentication agent 50, the issuing bank agent 55, the merchant agent 60, the customer bank agent 70, and the payment processor 80 should be understood to be a computer, server, smart phone, or other technical component or module associated with a respective party (e.g., an authenticating bank, issuing bank, a merchant, a customer bank, and a payment service, respectively) that is capable of communication with other parties via the network 30, and under control of or responsive to facilitating communication by the facilitation agent 44.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of the debit or credit card on behalf of the facilitation agent 44 and be responsible for directly paying the merchants and merchants during a transaction initiated by the customer via the debit or credit card.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenicator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account. In an example embodiment, the customer may subscribe or register to a service or request a card (e.g., a credit card, debit card or other virtual or digital card) from the facilitation agent 44 to enroll the customer as a member of the SFP platform 10. During subscription or registration, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online.

The customer bank agent 70 may change for each respective one of the clients 20 (and therefore for each respective customer). Similarly, the merchant agent 60 may change for each respective transaction since different merchants may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase in real time from a merchant associated with the merchant agent 60. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44. In some cases, the customer may be provided with a card (e.g., a debit card or credit card) or other physical implement that can be used to initiate transactions with merchants. As noted above, the card may be issued by the issuing bank. The card may be associated with the user account, and may provide identifying information needed to initiate operation of the SFP platform 10 (and the facilitation agent 44) as described herein when the customer uses the card to make a purchase with a merchant. The card may be physically presented for such purpose and magnetic strip, chip or other technologies may be used in connection with initiating the transaction. Otherwise, the card number provided on the card may be unique to the user account, and may be provided to the merchant to initiate the transaction. Finally, as an additional or alternative way to initiate a transaction, the card may be virtual and may exist in a mobile wallet or other smartphone context for initiating transactions online. In such a context, the client application 22 may also or alternatively be the means by which the transaction is initiated or handled. Thus, it should be appreciated that the client application 22 could be used to set up the user account and user profile and/or to conduct individual transactions.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and deferred decision making as to how to settle such transactions as described in greater detail below.

The issuing bank may have an agreement or relationship with the entity associated with the facilitation agent 44 that enables the facilitation agent 44 to engage the issuing bank to extend funds to a merchant or vendor on behalf of the customer in response to instruction from the facilitation agent. The facilitation agent 44 may therefore coordinate communications and funds transferring between members or parties of the SFP platform 10 to facilitate payment transactions that can be handled in ways selected specifically by the customer. In this regard, the customer may approach the merchant (physically or virtually) in order to initiate a transaction. The card (virtual or physical) may be provided for payment, and the corresponding indication of a pending transaction may be communicated (e.g., via the SFP platform 10 by the merchant agent 60 and/or the client 20 via the network 30. The transaction may be mapped to a previously planned purchase for which a loan is approved and flow of funds reserved for the loan may be managed without any further need for customer interaction. The communication and activities that ensue from the basic description above will now be described greater detail below.

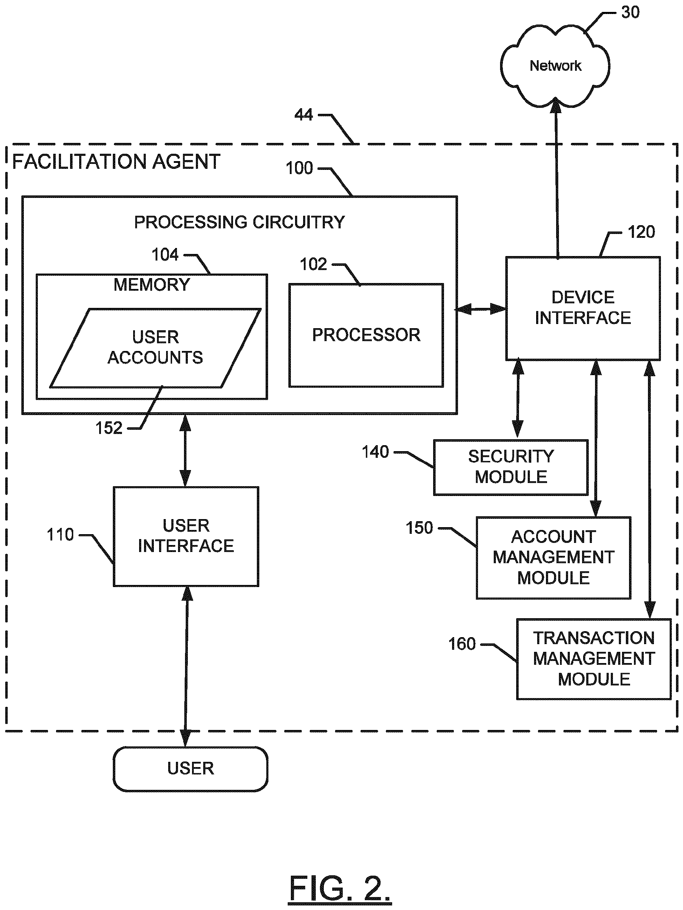

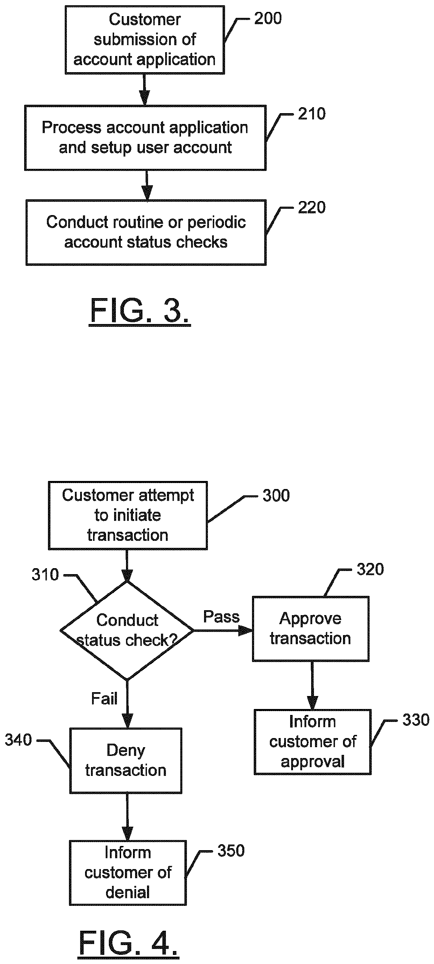

Regardless of how the transactions are initiated, the SFP platform 10 of FIG. 1 may be used before, during and after the time of the transaction in order to enable the facilitation agent 44 to set up the user account, make determinations necessary to approve a loan in association with a planned transaction prior to its initiation, conduct the transaction in real time responsive to initiation of the transaction, facilitate flow of funds and issuance of the loan responsive to mapping the transaction to the planned transaction and corresponding loan, and managing the flow of funds accordingly at the appropriate time. Each of these activities may have its own respective timing and communications that are facilitated by the facilitation agent 44 and FIGS. 3-6 illustrate example control flows associated with various scenarios. However, prior to examining each respective scenario, the structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some example embodiments may be embodied wholly at a single device (e.g., the application server 42) or by devices in a client/server relationship (e.g., the application server 42 and one or more clients 20). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer or user accounts (and a corresponding user profile), and the coordination of communication and fund transfers to support the operations of the SFP platform 10 as described herein. The tools may be provided in the form of various modules that may be instantiated by configuration of the processing circuitry 100. FIG. 2 illustrates some examples of modules that may be included in the facilitation agent 44 and that may be individually configured to perform one or more of the individual tasks or functions generally attributable to the facilitation agent 44 according to an example embodiment. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include a security module 140. The security module 140 may be configured to enforce data security and data/user access control. In some example embodiments, the security module 140 may employ authentication and authorization tools to manage the provision of access to customers or other SFP platform 10 members or entities wishing to access the SFP platform 10. The security module 140 may operate on queries or communications in real time as such queries or communications are occurring.

The facilitation agent 44 may also include an account management module 150. The account management module 150 may be configured to manage storage of and access to information about individual customers including user accounts 152 and corresponding user profiles, which may include descriptive information about settings, approvals, or management paradigms that apply to specific merchants or transactions for each instance of the user accounts 152. The user accounts 152 may include details of the checking or savings account at the customer bank for each customer and respective client 20, and authorizations to check account status for each.

In an example embodiment, the account management module 150 may handle communications with the clients 20 associated with setting up the user accounts 152. The user profile associated with each respective one of the user accounts 152 may include user preferences, entitlements, or authorizations (e.g., credit limits) with respect to the amount of debt each user is enabled to take on either in aggregate, on a transaction by transaction basis, on a merchant basis, or with respect to specific types of goods or services. Each transaction may, for example, be authorized only if rules associated with either user preferences or policies that the customer has reviewed and accepted as terms of service are met. Those rules may be established during account setup and recorded for each of the user accounts 152 by the account management module 150.

In an example embodiment, the facilitation agent 44 may also include a transaction management module 160. The transaction management module 160 may coordinate or facilitate all communications with the parties to the SFP platform 10 in association with each transaction that is initiated by a customer, and each transaction that is planned by a customer in advance. As such, the transaction management module 160 may be configured to handle communications with the client 20, the merchant agent 60, the customer bank agent 70, the bank authentication agent 50, the issuing bank agent 55, and the payment processor 80 as described in greater detail below in response to and prior to handling a transaction. In the responsive case, for example, the transaction management module may receive an indication of a pending transaction and, within a predetermined period of time (e.g., 3 seconds) make a determination as to whether to authorize the transaction or deny the transaction. The decision to authorize or deny the transaction may be made based on either a real time and concurrent check on the account status (e.g., account balance) of the checking or savings account identified in the user account 152, or based on the last snapshot of the account status (assuming the snapshot was taken within a predetermined period of time (e.g., 3 days or less). If the account status is satisfactory, the transaction may be authorized, and further communications and coordination details described below may be handled by the transaction management module 160. The transaction management module 160 may also be configured to, assuming certain criteria are met, provide the customer with options for either immediate settlement relative to the transaction, or whether to convert the transaction to an installment loan with predetermined (or customer selected) payment terms.

FIG. 3 illustrates a block diagram of a communication paradigm that is achievable using an example embodiment for setting up a user account. Referring to FIG. 3, a client (e.g., one of the clients 20 of FIG. 1) may make an account application at operation 200. The account application may be submitted to the facilitation agent 44 via the client application 22 and interface with a website or smart phone application for account setup. The account application may include an identification of the customer (or user) and information establishing a confirmation of employment or monthly income for the customer. The account application may also or alternatively provide account details for the savings account and/or checking account that will serve as the primary account from which funds for repaying transactions are extracted. The account application may also include permissions, acknowledgements and any other required communications to authorize setup of the user account 152. At operation 210, the facilitation agent 44 may process the account application and setup the user account incorporating a user profile for the user account. As noted above, the user account may include identifying information for the checking or savings account of the customer. Thereafter, at operation 220, the facilitation agent 44 may routinely or periodically check the checking or savings account to determine account status and may retain such information for transaction processing as described herein. Periodic checks may occur with a selected periodicity and each check may return a snapshot view of the account status at the corresponding time. Routine checks may be initiated responsive to specific activities such as initiation of a transaction. As noted above, the account management module 150 may handle the processes of the facilitation agent 44 that are covered by the example of FIG. 3.

FIG. 4 is a block diagram of control flow associated with a customer executing a transaction at the point of sale (or online). As shown in FIG. 2, the initial operation of the customer attempting to initiate a transaction with a merchant may occur at operation 300. The customer may physically present the card (e.g., similar to presentation of a debit card or credit card), use a digital card, or may provide card number information if the card is not physically present. Thereafter, the facilitation agent 44 may conduct a status check (e.g., check the account status in real time or based on the last snapshot view) to determine eligibility of the transaction within a predetermined period of time (e.g., about 3 seconds) at operation 310. If the status check passes (e.g., indicating that the checking or savings account has a balance sufficient to cover the transaction), the facilitation agent 44 may approve the transaction and the merchant may receive an indication that the transaction has been approved at operation 320. The merchant may put an authorized hold on funds associated with the amount of the transaction at the authenticating bank. The customer may also receive (e.g., via the client application 22) a push message to indicate that the transaction was approved at operation 330.

If instead, the status check does not pass, then the facilitation agent 44 may deny the transaction and the merchant may receive an indication that the transaction has been denied at operation 340. The customer may also receive (e.g., via the client application 22) a push message to indicate that the transaction was denied at operation 350.

However, as noted above, the transaction management module 160 may also enable the identification of a future purchase so that such identified purchase may be evaluated for financing. The transaction management module 160 may therefore be further configured to interact with the customer prior to a transaction to identify a plan for such transaction, and obtain financing for the transaction in advance. Notably, this is not merely getting pre-approval for a loan, as such pre-approvals are typically granted without regard to any specific transaction, and only instead in relation to the customer's creditworthiness for obtaining a loan without regard to the merchant or item purchased. Example embodiments therefore require additional information to be provided, and technically process that additional information as a condition to receiving approval for not just some future loan amount, but instead for a loan associated with a transaction of a previously planned or future purchase.

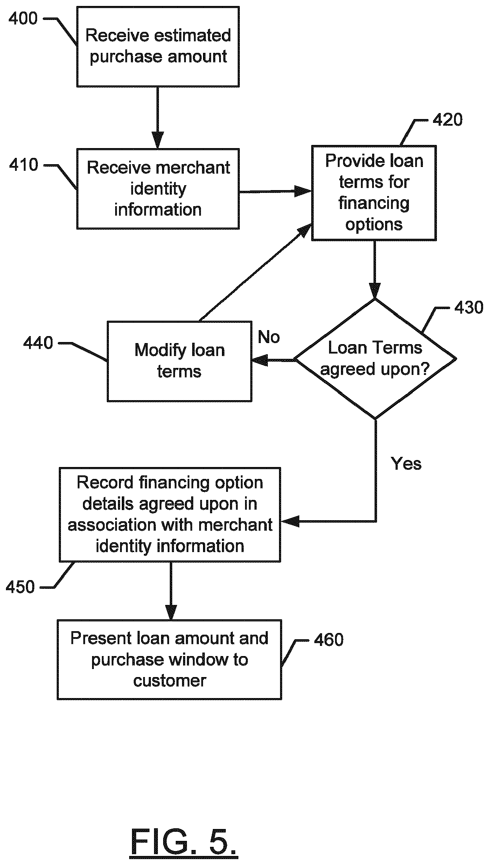

FIG. 5 illustrates a block diagram of some of the operations that the transaction management module 160 may further be configured to perform in association with an example embodiment. In this regard, as shown at operation 400, the transaction management module 160 may receive an estimate from the customer of a purchase amount (e.g., an estimated purchase amount) corresponding to the future purchase. The estimated purchase amount may be accompanied with merchant identity information (e.g., a name of the merchant) in order to make the future purchase recognizable in the future. Operation 410 therefore shows the receipt of the merchant identity information. Loan terms associated with a financing option may then be presented to the customer at operation 420. A determination may then be made as to whether loan terms are agreed upon (for the estimated purchase amount and the identified merchant) at operation 430. If loan terms are not agreed upon at operation 430, then the loan terms may be modified at operation 440, thereby cycling flow back to operation 420 after some modification or options selection to make the financing option acceptable to the customer. Whether immediately, or after such modification as that associated with operation 440, when the customer agrees to loan terms at operation 430, flow may pass to operation 450. At operation 450, the financing option details that have been agreed upon may be recorded (or stored) in association with the merchant identity information. The agreed upon loan amount and a purchase window defining a time during which the loan may be obtained (and therefore a time during which the future purchase must be executed) may then be presented to the customer at operation 460 (e.g., by instruction for display of such information at the client 20) with or without additional information (e.g., the merchant identity information).

All of the activities of FIG. 5 may occur at any time within the time window prior to a subsequent transaction occurring involving a card (e.g., a physical or virtual debit card) associated with the customer. The card may be a card on file or recorded in association with the corresponding one of the user accounts 152 of the customer. However, to this point, no funds (i.e., no money) has moved between any of the entities of FIG. 1. Instead, funds may only be reserved for funding the loan defined by the financing option selected or the agreed upon loan terms.

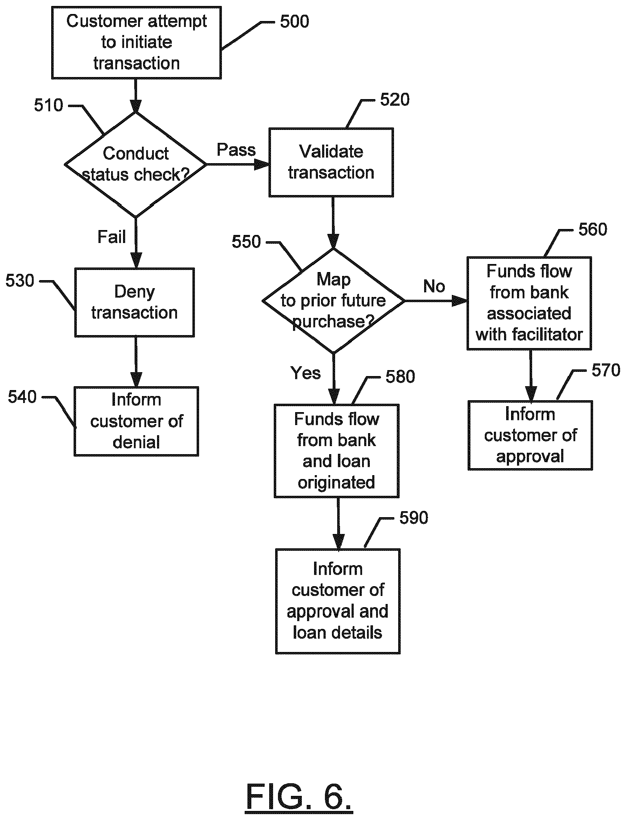

A length of the purchase window may be selected by the transaction management module 160 based on numerous factors. In some embodiments, the length of the purchase window may be consistent for any customer or merchant. In this regard, for example, the length of the purchase window may be selected based on fraud rules that are consistent across all merchants and customers. However, in some cases, the fraud rules or other criteria that are used to define the length of the purchase window may enable lengths to be increased on a customer-by-customer basis based on usage or creditworthiness (e.g., credit rating). Criteria may also vary across merchants, as some merchants may provide funding, or have relationships established with the facilitator, to increase the length of the purchase window. Thus, for example, the length of the purchase window may be fixed, or may vary based on the customer or merchant. When the transaction occurs, continued operation of the transaction management module 160 may occur as described in reference to FIG. 6.

FIG. 6 is a block diagram of control flow associated with handling of a transaction in accordance with an example embodiment. Notably, FIG. 6 may therefore be similar in some respects to the control flow of FIG. 4 except that FIG. 6 deals with the further unique case of the transaction being a future purchase that was previously identified by the customer, and for which loan terms have already been agreed upon.

Thus, for example, the initial operation of the customer attempting to initiate a transaction with a merchant may occur at operation 500. The customer may physically present the card (e.g., similar to presentation of a debit card or credit card via swipe or tap), use a digital card, or may provide card number information if the card is not physically present. Thereafter, the facilitation agent 44 may conduct a status check to determine eligibility of the transaction within a predetermined period of time (e.g., about 3 seconds) at operation 510 (similar to operation 310 above). If the status check passes , the facilitation agent 44 may validate the transaction and the merchant may receive an indication that the transaction has been approved at operation 520. Funds do not yet move with this validation. If instead, the status check does not pass , then the facilitation agent 44 may deny the transaction and the merchant may receive an indication that the transaction has been denied at operation 530. The customer may also receive (e.g., via the client application 22) a push message to indicate that the transaction was denied at operation 540.

If validated at operation 520, a determination may be made as to whether the transaction can be mapped to a previously identified future purchase at operation 550. The facilitation agent 44 may use a collection of rules or criteria for mapping including minimum (or maximum) transaction values, rules regarding presence of the card, and various other identity or transaction specific rules. For example, determining that the transaction maps to the previously identified future purchase may be accomplished by matching transaction amount and merchant identity criteria. Whether transaction amount criteria are met may be determined by comparing an amount of the transaction to the estimated purchase amount. Whether merchant identity criteria are met may be determined by comparing a current merchant identified by the customer to the merchant identity information stored by the facilitation agent 44.

In some example embodiments, the estimated purchase amount must be within a predetermined dollar value, or a predetermined percentage value of the estimated purchase amount to meet the transaction amount criteria. Thus, for example, if the predetermined dollar value is $50, then for the estimated purchase amount was $400, the amount of the transaction must be between $350 to $450 to meet the transaction amount criteria. However, if the predetermined percentage value was instead used and was 10%, then the amount of the transaction must be between $360 and $440 to meet the transaction amount criteria. In some example embodiments, the location of the customer (or entity (e.g., merchant) identified with the transaction) must be within a predetermined distance of a location (e.g., latitude/longitude) of the merchant associated with the merchant identity information in order to meet the merchant identity criteria. Alternatively or additionally, a name of the merchant may match the merchant identity information in order to meet the merchant identity criteria.

If either or both the merchant identity criteria and the transaction amount criteria are not met, the transaction may not be considered to map to a prior future purchase. In such a case, the transaction will remain a debit transaction post swipe. Thus, for example, the merchant may put an authorized hold on funds associated with the amount of the transaction at the authenticating bank and, when the transaction is settled, funds may flow from a bank associated with the facilitator) at operation 560. The customer may also receive (e.g., via the client application 22) a push message to indicate that the transaction was approved and processed as a debit transaction at operation 570.

When both the merchant identity criteria and the transaction amount criteria are met, the transaction may be considered to map to a prior future purchase. In such a case, no funds initially move to support the transaction at the time thereof. Instead, when the merchant submits the transaction for settlement with the facilitator, the facilitator initiates a flow of funds from a bank associated with the facilitator (e.g., the issuing bank) and the loan to which the transaction mapped is originated at operation 580. The customer need not have any awareness to these activities. Instead, after the loan is originated, the transaction information may be used to update the account status of the customer and, for example, if the customer logs into his/her user account, the customer may see an update reflecting the loan originated by the transaction at operation 590. The transaction itself, and the corresponding loan details may be displayed at the client 20. The loan details may include, among other things, an indication of when the next payment is due on the loan. The payment may then be extracted automatically or manually on the schedule defined in the loan details.

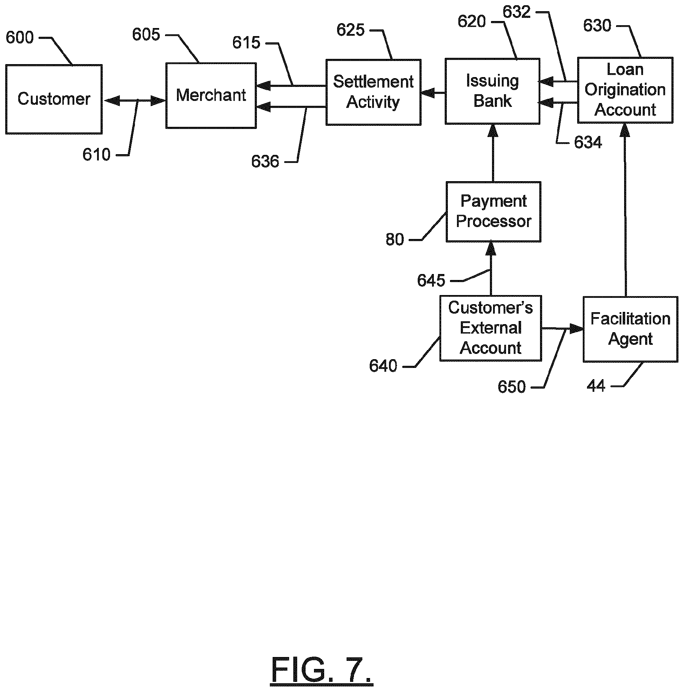

FIG. 7 is a block diagram of control flow associated with flow of funds in accordance with an example embodiment. As shown in FIG. 7, a customer 600 and a merchant 605 may engage in a transaction 610 that maps to a previously identified future transaction, and for which loan terms have been previously agreed upon. The day on which the transaction occurs may be considered to be day 0 in the timeline of events associated with the transaction 610. Also on day 0, and as an immediate result of the transaction being approved via the processes described above, an authorization 615 for funds to be transferred to the merchant 605 may be issued by the issuing bank 620 as part of settlement activity 625. The issuing bank 620 may also conduct a settlement transfer 636 between day 0 and day 7 after the transaction 610 as part of the settlement activity 625.

A facilitator loan origination account 630 may exist (in association with facilitator) and deposits 632 may be provided from the facilitator loan origination account 630 to the issuing bank 620 prior to any debit transactions (i.e., prior to day 0) to ensure that debit transactions are not declined and that settlement may occur (i.e., that funds are available at the issuing bank 620) within a period of time of about two days. Money may also transfer (e.g., about at day 2) for any cases where an installment loan is made using the processes described herein to fund the issuing bank for the captured loan as shown by flow 634. The customer's external account 640 (i.e., at the customer bank) may also be available to transfer funds via the payment processor 80 to the issuing bank 620. In this regard, on about day 1 or 2, first payment funds 645 may be transferred from the customer's external account 640 to the issuing bank 620 via the payment processor 80 under direction of the facilitation agent 44. In some cases, payments 650 may also be made (e.g., at the payment intervals determined by the terms of the installment loan) to the facilitation agent 44 from the customer's external account 640. The facilitation agent 44 may also make transfers to the facilitator loan origination account 630. Thus, all fund transfers to the issuing bank 620 may be conducted under control of the facilitation agent 44.

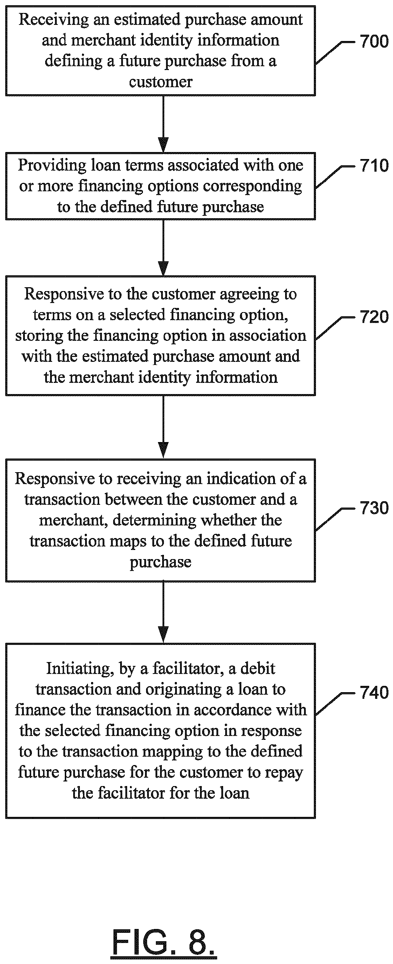

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 8 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of processing a customer transaction according to one embodiment of the invention is shown in FIG. 8. The method may include receiving an estimated purchase amount and merchant identity information defining a future purchase from a customer at operation 700 and providing loan terms associated with one or more financing options corresponding to the defined future purchase at operation 710. The method may further include, responsive to the customer agreeing to terms on a selected financing option, storing the financing option in association with the estimated purchase amount and the merchant identity information at operation 720 and, responsive to receiving an indication of a transaction between the customer and a merchant, determining whether the transaction maps to the defined future purchase at operation 730. The method may also include initiating, by a facilitator, a debit transaction and originating a loan to the customer to finance the transaction in accordance with the selected financing option in response to the transaction mapping to the defined future purchase for the customer to repay the facilitator at operation 740.

In an example embodiment, an apparatus for performing the method of FIG. 8 above may comprise a processor (e.g., the processor 102) or processing circuitry configured to perform some or each of the operations (700-740) described above. The processor may, for example, be configured to perform the operations (700-740) by performing hardware implemented logical functions, executing stored instructions, or executing algorithms for performing each of the operations. In some embodiments, the processor or processing circuitry may be further configured for additional operations or optional modifications to operations 700 to 740.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, determining whether the transaction maps to the defined future purchase may include matching transaction amount criteria and merchant identity criteria. In an example embodiment, the transaction amount criteria may be matched responsive to the estimated purchase amount being within a predetermined dollar value of an amount of the transaction, or responsive to the estimated purchase amount being within a predetermined percentage value of an amount of the transaction. In some cases, the merchant identity criteria may be matched responsive to a name of the merchant matching the merchant identity information, or responsive to a location of the customer or a location of the merchant being within a predetermined distance of a location associated with the merchant identity information. In an example embodiment, the method may further include providing the loan terms (e.g., for an installment loan) to a communication device of the customer via one or more messages sent to the communication device, receiving feedback from the customer via a user input at the communication device to define the selected financing option, providing the selected financing option for review and acceptance at the communication device, and responsive to the origination of the loan, providing a payment schedule at the communication device. In some cases, providing the loan terms may further include providing an indication of a purchase window to the customer, and originating the loan to finance the transaction may only be permitted when the receiving the indication of the transaction occurs within the purchase window. In an example embodiment, no funds flow to the merchant until after determining that the transaction maps to the defined future purchase and the origination of the loan. In some cases, receiving the indication of the transaction may include receiving an indication of a swipe or tap of a debit card, or receiving an indication of manual entry of card information associated with the debit card, where the debit card is associated with an account of the customer that is registered for services associated with defining the future purchase.

The ability to define a future purchase that is described above may apply to either a physical card that is associated with the user account (e.g., a debit card, credit card, or other physical payment facilitating card), or to a virtual card that is associated with the user account. In any case, by providing technical means to not only identify a future purchase, but obtain financing specifically for that purchase can reserve funds and ensure that the purchase is conducted seamlessly when the time comes to actually carry out the previously planned purchase. Thus, originating an installment loan to cover a planned transaction can occur without any transactional friction at the time of purchase. There is no waiting for loan approval, but instead the technical components work together to ensure that the prior agreed upon loan terms are married to the current transaction in a seamless way. But doing so relies upon the technical ability to ensure that the transaction being undertaken corresponds precisely to the previously identified future purchase, and example embodiments provide this technical ability.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of processing a customer transaction, the method comprising:
receiving an estimated purchase amount and merchant identity information defining a future purchase from a customer;
providing loan terms associated with one or more financing options corresponding to the defined future purchase;
responsive to the customer agreeing to terms on a selected financing option, storing the financing option in association with the estimated purchase amount and the merchant identity information;
responsive to receiving an indication of a transaction between the customer and a merchant, determining whether the transaction maps to the defined future purchase; and
originating a loan to finance the transaction in accordance with the selected financing option in response to the transaction mapping to the defined future purchase.

2. The method of claim 1, wherein determining whether the transaction maps to the defined future purchase comprises matching transaction amount criteria and merchant identity criteria.

3. The method of claim 2, wherein the transaction amount criteria is matched responsive to the estimated purchase amount being within a predetermined dollar value of an amount of the transaction.

4. The method of claim 2, wherein the transaction amount criteria is matched responsive to the estimated purchase amount being within a predetermined percentage value of an amount of the transaction.

5. The method of claim 2, wherein the merchant identity criteria is matched responsive to a name of the merchant matching the merchant identity information.

6. The method of claim 2, wherein the merchant identity criteria is matched responsive to a location of the customer or a location of the merchant being within a predetermined distance of a location associated with the merchant identity information.

7. The method of claim 1, wherein the method may further include:
providing the loan terms to a communication device of the customer via one or more messages sent to the communication device;
receiving feedback from the customer via a user input at the communication device to define the selected financing option;
providing the selected financing option for review and acceptance at the communication device; and
responsive to the origination of the loan, providing a payment schedule at the communication device.

8. The method of claim 1, wherein providing the loan terms further comprises providing an indication of a purchase window to the customer, and
wherein originating the loan to finance the transaction is only permitted when the receiving the indication of the transaction occurs within the purchase window.

9. The method of claim 1, wherein no funds flow to the merchant until after determining that the transaction maps to the defined future purchase and the origination of the loan.

10. The method of claim 1, wherein receiving the indication of the transaction comprises receiving an indication of a swipe or tap of a debit card, or receiving an indication of manual entry of card information associated with the debit card, the debit card being associated with an account of the customer that is registered for services associated with defining the future purchase.

11. An apparatus for processing a customer transaction, the apparatus comprising processing circuitry configured to perform the method of any claims 1-10.
